# FASCICULE DE BREVET EUROPEEN

(11) **EP 2 342 678 B1**
(45) Date de publication et mention de la délivrance du brevet: **03.07.2013**
(21) Numéro de dépôt: 09817272.9
(22) Date de dépôt: 30.07.2009
(51) Int. Cl.: G06K 17/00, G06K 19/07, G06K 7/00, H04B 3/54

(54) **PROCÉDÉ ET SYSTÈME DE COMMUNICATION DE DONNÉES AVEC UN DISPOSITIF ÉLECTRONIQUE INACCESSIBLE**
DATENKOMMUNIKATIONSVERFAHREN UND -SYSTEM MIT EINER UNZUGÄNGLICHEN ELEKTRONISCHEN VORRICHTIGUNG
METHOD AND SYSTEM FOR DATA COMMUNICATION WITH AN INACCESSIBLE ELECTRONIC DEVICE

(30) Priorité: 30.09.2008 EP 08305616
(43) Date de publication de la demande: 13.07.2011
(73) Titulaire: Gemalto SA, 92190 Meudon (FR)
(72) Inventeur: CARUANA, Jean-Paul, F-13009 Marseille (FR); CAPOMAGGIO, Grégory, F-13360 Roquevaire (FR)
(86) Numéro de dépôt international: PCT/EP2009/059909
(87) Numéro de publication internationale: WO 2010/037583

(56) Documents cités:
- US-A1- 2005 274 803
- ANONYMOUS: "Power line communication" WIKIPEDIA THE FREE ENCYCLOPEDIA, [Online] 21 septembre 2008 (2008-09-21), pages 1-11, XP002517053 Extrait de l'Internet: URL:http://en.wikipedia.org/w/index.php?ti tle=Power_line_communication&oldid=2400250 24> [extrait le 2009-02-26]
- MARYANKA, YAIR: "Wiring Reduction by Battery Power Line Communication" INTERNET ARTICLE - YAMAR ELECTRONICS, [Online] mai 2000 (2000-05), pages 1-3, XP002517054 TEL AVIV, ISRAEL Extrait de l'Internet: URL:http://www.yamar.com/Wiring-reduction- by-DC-powerline-communication.pdf> [extrait le 2009-02-26]

## Description

L'invention concerne un procédé et un système de communication de données avec un dispositif électronique comprenant l'étape ou des moyens de réception de signaux véhiculés par un conducteur électrique de liaison.

Elle concerne également en particulier des dispositifs d'identification d'abonné tels que des module SIM ou module universel SIM (USIM) destinés à équiper des appareils dotés de moyens de communication radiofréquence notamment de type cellulaire.

Les modules M2M sont des dispositifs d'identification d'abonné, comme les cartes SIM, fixés dans diverses nouvelles cibles comme l'automobile, les distributeurs de boissons, ou autres machines, équipements, installations, etc., ces nouvelles cibles étant amenées à se développer.

Ces modules sont solidairement fixés dans ces appareils et sont robustes; D'autre part aucune connexion extérieure n'est prévue ou possible pour communiquer avec ces modules et il existe un grand nombre de contraintes d'intégration selon le type de machine visé. Par exemple dans une voiture, le module M2M pourrait être intégré sous le siège ou n'importe où sans aucun accès direct.

Une solution pour accéder à ces modules et modifier le contenu mémoire est de télécharger des données à l'aide de moyens communicants radiofréquences du réseau de téléphonie mobile ou cellulaire qu'elles équipent et auxquels les modules sont connectés par contact ohmique.

Toutefois, il est souhaitable de pouvoir personnaliser le module SIM pour pouvoir accéder au réseau d'un opérateur, changer d'opérateur, de numéro, dès le début avant mise en fonctionnement de la communication et personnaliser le module , le cas échéant.

A ce jour, il est donc très difficile d'accéder physiquement au module de manière à lui envoyer des données notamment de personnalisation.

Il y a donc aujourd'hui un besoin pour effectuer une gestion directe du module SIM, notamment pour de la personnalisation et mise à jour, le module pouvant être difficilement accessible voir même très difficile à localiser.

Concernant les procédés de communication avec un module d'identification d'abonné, on connait le brevet FR 2 888 974 qui décrit comment communiquer entre un téléphone mobile et une puce de module SIM par légère modulation de la tension d'alimentation, la démodulation étant effectuée dans la puce. Cette solution a l'inconvénient de requérir des adaptations importantes dans la conception des puces de circuits intégrés.

L'invention vise à satisfaire le besoin ci-dessus de permettre une personnalisation d'un module M2M SIM quel que soit son niveau ou mode d'intégration et sans accès le cas échéant.

L'invention consiste dans son principe à prévoir dans le dispositif une interface RF capable de recevoir des trames de signaux de type radiofréquence, puis à recevoir les données via un conducteur, à extraire les données hors du conducteur pour les injecter dans l'interface RF.

Considérant que l'interface d'un dispositif est difficilement accessible même en radiofréquence compte tenu d'un environnement métallique, l'idée de base est de véhiculer les données jusqu'à proximité du dispositif en s'aidant notamment de la structure de la machine ou câblage de circuit existant et à prélever et, le cas échéant, transformer les données en signaux exploitables par le circuit RF.

De manière avantageuse, le signal est prélevé et/ou transformé sous forme de trames de type radiofréquence analogique de manière à être injectée directement de manière électrique sur une interface à contact électrique du dispositif radiofréquence. Avantageusement, le dispositif comprend un module d'identification d'abonné de type combi, l'alimentation s'effectuant par contact électrique de manière classique, tandis que l'autre interface, permet de recevoir des signaux RF par contact électrique.

Le signal RF étant du 13.56MHz conforme à l'ISO/IEC 14443 et toutes les autres couches (logiciel, protocole, couche de liaison) sont basées sur le standard ISO/IEC 14443.) grâce à l'invention on peut utiliser une puce SIM combi comme puce SIM. Un tel module SIM est divulgué dans US 2005/0274803 A1.

Ainsi, grâce à l'invention, il n'y a pas de contrainte d'intégration pour le fabricant de machine. Il n'est pas nécessaire de connaître la localisation du module M2M qui peut être localisée n'importe où.

Il n'y a pas non plus de contrainte d'intégration pour le fabricant de module de manière à personnaliser in situ le module M2M.

Il n'y a pas non plus de contrainte d'intégration pour le fabricant de module de fabriquer une SIM spécifique dans la mesure où une SIM combi existe déjà;

L'invention permet également de connecter et d'adresser plusieurs modules grâce aux propriétés d'anticollision.

A cet effet, l'invention a pour objet un procédé de communication de données avec un dispositif électronique, selon la revendication 1.

Selon d'autres caractéristiques de mise en oeuvre :
- les données sont transmises en modulant des signaux radiofréquences sur un signal de puissance véhiculé par le conducteur électrique;
- la transmission s'effectue avec un lecteur radiofréquence ayant une interface capacitive avec le conducteur pour injecter le signal radiofréquence sur le conducteur;
- le dispositif comprend un module d'identification d'abonné (M2M);

L'invention concerne également un dispositif électronique selon la revendication 7.

Selon d'autres modes de réalisation, du dispositif:
- le conducteur fait partie d'un circuit d'alimentation en puissance;
- Le dispositif comprend un module d'identification (M2M) de type combi, le circuit d'alimentation étant une alimentation en courant continu du circuit combi.

L'invention concerne également un système comprenant le dispositif ci-dessus; Le système se distingue en ce qu'il comprend en outre un conducteur électrique de liaison pour la transmission des données à destination du dispositif et des moyens de génération de données sur le conducteur électrique.

Selon une autre caractéristique, la transmission s'effectue avec un lecteur de type sans contact RF ayant une interface capacitive avec le conducteur électrique de liaison pour injecter des signaux sur le conducteur.

L'invention concerne également une machine comportant le dispositif selon ci-dessus et/ou étant équipée du système ci-dessus et/ou étant apte à mettre en oeuvre le procédé ci-dessus.

D'autres particularités et avantages de l'invention apparaîtront à la lecture de la description faite à titre d'exemple non limitatif et en regard des dessins annexés sur lesquels :
- La figure 1 illustre un système de communication radiofréquence selon un mode préféré de réalisation de l'invention;
- La figure 2 illustre les étapes du procédé de l'invention selon un mode préféré.

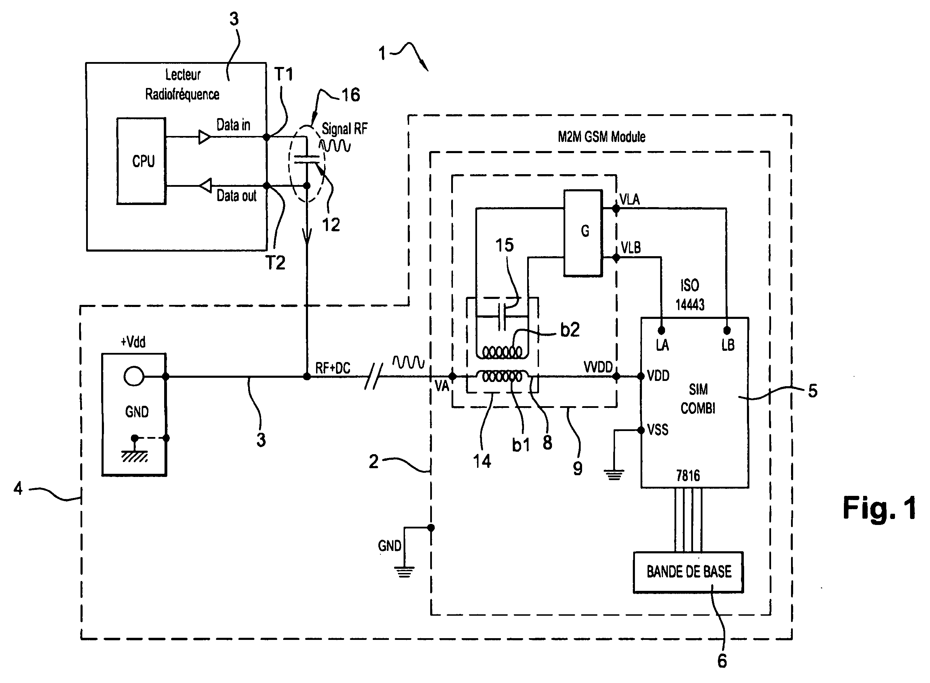

A la figure 1, un système de communication radiofréquence 1 comporte un dispositif 2 radiofréquence RF, un conducteur électrique de liaison 3 pour la transmission des données jusqu'au dispositif, des moyens de génération 3 d'un signal radiofréquence modulé sur le conducteur électrique.

Le dispositif 2 peut être compris dans tout élément 4 tel qu'un appareil /dispositif électronique de communication, assistant personnel, PDA, ordinateur portable, machine, distributeur, structure, véhicule automobile, tout équipement etc. destiné à communiquer à l'aide d'un circuit radiofréquence 5.

L'équipement 2 comporte classiquement une unité électronique de traitement à processeur 6 (dit base bande) destinée à gérer la fonction de téléphonie et des périphériques éventuels notamment une carte SIM 5, l'application GSM relative notamment à l'identification à un réseau téléphonique et/ou d'autres applications éventuelles, comme par exemple une application de rechargement à distance ou autre.

Selon l'invention le dispositif comprend un circuit sans contact RF ayant une interface radiofréquence RF à contacts électriques. Dans l'exemple, ce circuit est constitué par une carte SIM de type combi carte c'est-dire comportant une double interface à contacts selon ISO 7816 et une interface radiofréquence LB, LB conforme au standard ISO 14443.

Des connexions CLK, RST, GND, I/O de l'unité électronique 5 de base sont réalisées classiquement sur les contacts électriques correspondant de la mini-carte UICC, SIM ou (U)SIM conformément à une des normes ISO 7816 par exemple via un bloc de connecteurs à 8 contacts placé dans l'appareil (ou soudé) et correspondant aux plages de contact électrique de la carte SIM.

Le dispositif ou circuit ou module SIM peut également être fixé à demeure dans tout appareil, notamment par soudure sur une carte de circuit imprimé d'un appareil quelconque.

Selon un mode de réalisation préféré de l'invention, le dispositif 2 comprend des moyens d'extraction de données pour les injecter électriquement sur l'interface RF. Les moyens d'extraction sont constitués dans l'exemple par un circuit d'adaptation 7 et un convertisseur 9 apte à extraire les données sur un élément 8 de circuit d'alimentation en puissance

En l'occurrence, le convertisseur comprend un couplage d'une première bobine sur une seconde bobine placée entre le plot d'alimentation VDD de la SIM Combi et l'arrivée d'une alimentation du dispositif. Une capacité est montée aux bornes de la bobine qui est branchée au circuit d'adaptation de tension 7 avant d'alimenter les plots LA et LB de l'interface ISO 14443 de la SIM Combi.

Les moyens d'extraction 9, 14 sont ici avantageusement situés hors du circuit RF contenu dans la SIM. Ils peuvent faire l'objet d'un composant d'extraction 9, 14 externe qui serait ajouté ou fixé au module SIM standard.

Le circuit RF de la SIM comporte de manière connue des moyens de réception et traitement de trames de signaux radiofréquences arrivant sur les bornes LA, LB.

Le dispositif est alimenté par une source d'énergie, notamment une batterie 10 par un conducteur 3 reliant la borne VDD du dispositif au travers de la bobine b1. Le plot de masse Vss est relié à la masse GND du châssis de l'appareil, (voiture, distributeur)

Selon un mode préféré, l'invention utilise un conducteur électrique de liaison pour la transmission des données jusqu'au dispositif.

Dans l'exemple, comme une alimentation normale en courant continu est prévue pour la SIM dans une machine comportant un module M2M, on utilise le conducteur d'alimentation 3 pour véhiculer des signaux RF selon la technologie du courant porteur.

Le circuit radiofréquence, dans l'exemple, est compris dans un module d'identification M2M de type combi et le circuit d'alimentation est une alimentation en courant continu du circuit combi.

Dans un autre exemple où la machine serait une voiture, la SIM pourrait être alimentée par des moyens conducteurs reliés à une batterie avec adaptateur de tension.

Selon le mode de réalisation préféré de l'invention, le système comprend également des moyens de génération 3 d'un signal radiofréquence modulé sur le conducteur électrique pour la transmission de données. L'injection s'effectue par contact électrique avec le conducteur électrique de liaison.

Dans l'exemple, ces moyens comprennent ou constituent un lecteur ou terminal classique radiofréquence 3 comportant une interface radiofréquence à contact électrique ayant des bornes T1, T2 destinées normalement à recevoir une antenne radiofréquence.

Pour la mise en oeuvre du procédé, le terminal comporte des moyens de modulation / démodulation aptes à moduler/démoduler le signal radiofréquence "data in" et/ou démoduler le signal parvenant sur le fil conducteur "data out". Ces moyens dans l'exemple comprennent une interface capacitive avec le conducteur électrique de liaison pour injecter le signal RF sur le conducteur. A cet effet, une capacité 12 remplace l'antenne et une borne de la capacité est connectée au conducteur électrique 3 de liaison.

Avantageusement, le conducteur correspond au câble d'alimentation du dispositif; ce conducteur peut ou non véhiculer ou porter le signal de puissance d'alimentation du dispositif. L'important selon le mode préféré, étant que le conducteur passe à proximité du dispositif pour permettre une extraction ou une interception.

Le système ci-dessus est normalement destiné à équiper une machine comportant le dispositif ci-dessus et/ou étant apte à mettre en oeuvre le procédé qui va être décrit ci-après.

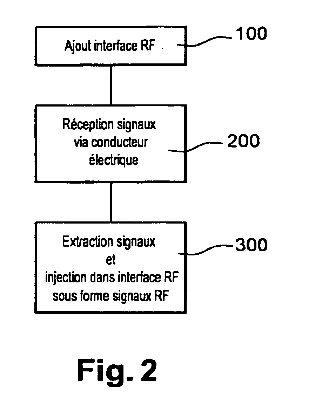

### Le fonctionnement du système de la figure 1 va être expliqué en relation avec des étapes du procédé à l'aide de la figure 2.

Le système adapté ci-dessus, est utilisé pour effectuer une transaction RF avec un dispositif sous forme de module SIM comportant selon l'invention une interface radiofréquence qui a été ajoutée (100) car normalement, le module SIM n'a pas besoin d'en comporter une quand il peut se satisfaire d'une interface ISO 7816; L'interface fonctionne ici sur une fréquence 13,56 Mhz et le module équipe une voiture. Plus exactement, le module est de type Combi avec une double interface de communication à contact selon l'ISO 7816 et à antenne selon l'ISO 14443.

Au cours d'une opération de transaction ayant pour finalité une initialisation ou personnalisation ou mise à jour de données contenues dans la SIM, un utilisateur branche un terminal 3 sur l'allume cigare sans avoir besoin d'extraire la SIM ou accéder à une interface, la SIM se trouvant sous le siège ou dans un endroit inaccessible de la voiture.

L'allume cigare est en relation avec le circuit d'alimention du module SIM M2M. Le cas échéant, un régulateur transforme la tension pour l'adapter à la SIM.

Le terminal de type sans contact RF adapté, ouvre une session de communication avec le module M2M et transmet des données, notamment d'authentification en vue d'une mise à jour.

Les données sont générées classiquement sous forme de signal RF par le terminal et transmises jusqu'à son interface T1, T2.

Le signal RF est transmis à l'interface capacitive que le terminal possède avec le conducteur pour injecter et démoduler le signal RF sur le conducteur.

Le signal RF parvient donc aux bornes de la capacité 12 reliée elle-même au conducteur électrique de liaison, constitué ici par le conducteur d'alimentation du module SIM. Les données sont donc transmises en modulant des signaux radiofréquences sur un signal de puissance véhiculé par un conducteur électrique. De ce fait on utilise à bon escient un circuit existant de la voiture qui comprend via l'allume cigare comme un point d'entrée des signaux qui pourront se propager jusqu'au module via le circuit d'alimentation.

De manière avantageuse, les trames des signaux RF transmis et/ou reçus sont compatibles au standard ISO/IEC 14443 et ont une fréquence de 13.56MHz. Ainsi, les modifications du terminal sont mineures voire nulle pour communiquer et/ou recevoir des signaux et données.

Le signal RF se superpose ensuite au courant continu porteur du conducteur qui alimente le point VDD de la carte SIM.

Selon le mode préféré de l'invention, on procède (200) à la réception des signaux véhiculés par le conducteur. Dans l'exemple, c'est l'ensemble signaux RF superposé au signal continu qui parvient au convertisseur 9.

Ensuite selon une étape (300), on procède à l'extraction des signaux du conducteur; Pour cela, les signaux arrivent dans le convertisseur 9, passent par la bobine 1 avant d'atteindre la carte SIM;

Des signaux RF induits dans la bobine b1 sont récupérés par la seconde bobine b2 et capacité 15.

Ensuite, selon l'étape (300) préférée du procédé, les signaux résultant des signaux extraits sont injectés dans l'interface RF sous forme de signaux RF.

Dans l'exemple, les signaux sont injectés électriquement à l'interface RF du module SIM après avoir été adaptés en tension par l'étage d'adaptation G en une tension acceptée par le module SIM.

Les trames radiofréquences parvenant sur les bornes d'interface RF LA, LB du module SIM combi ont les mêmes caractéristiques que si elles étaient issues d'une antenne reliée aux points LA, LB.

Grâce à l'invention, les données sont extraites hors du circuit RF ou du module SIM pour les injecter électriquement sur l'interface RF du module SIM. De ce fait, il y a peu ou pas de modifications à effectuer sur le module SIM. En outre, une adaptation peut s'effectuer avec des moyens d'adaptation placés à l'extérieur d'une puce SIM combi standard qui viendrait s'ajouter à elle, sous forme, notamment d'un composant d'adaptation 14 comportant les éléments 9, G et ayant les trois connecteurs WDD, VLA, VLB connectés respectivement au VDD, LA, LB et un connecteur VA à connecter à la tension d'alimentation.

Pour communiquer des données aux modules SIM, on peut employer toute technique de modulation connue comme par exemple la modulation d'amplitude, la modulation de fréquence ou la modulation de phase qui serait injectée sur un conducteur ou support de communication disponible dans la machine et passant à proximité du module SIM.

A proximité du module, un moyen d'adaptation récupère le signal, le transforme le cas échéant en signal acceptable par le module et l'injecte dans le module.

Différentes manières connues de l'homme du métier pour coder les données, informations, avec le protocole associé peuvent être utilisées.

Dans une variante, le signal est récupéré sur le conducteur, puis transformé en signal radiofréquence à l'aide d'une bobine couplé à une interface à antenne du module.

Le principe de l'invention peut être appliqué et adapté pour l'utilisation de tout réseau électrique, notamment le réseau EDF à 220 V, pour communiquer de manière filaire avec un dispositif radiofréquence notamment un module SIM.
- Grâce à l'invention, on peut utiliser à bon escient, les propriétés analogiques de l'interface sans contact RF pour extraire le signal;
- On peut utiliser les propriétés de fréquence de l'interface sans contact pour séparer les données liées au courant continu;
- On peut utiliser les propriétés d'anticollision de l'interface sans contact pour connecter plusieurs modules notamment M2M sur le même circuit de conducteurs ou réseau d'alimentation;
- On peut utiliser le protocole sans contact pour transférer les commandes SIM sans modification du jeu de commande utilisé pour personnaliser.

## Revendications

1. Procédé de communication de données avec un dispositif électronique, comprenant l'étape de réception de signaux véhiculés par un conducteur électrique de liaison (3), le dispositif comprenant un module (5) ayant des plots (LA, LB) prévus pour communiquer avec une interface radiofréquence sous forme de trames de signaux radiofréquences,
**caractérisé en ce qu'**il comprend les étapes suivantes:
- mise en place d'une interface radiofréquence RF à contacts électriques dans le dispositif, ladite interface radiofréquence RF à contacts électriques étant connectée aux plots (LA, LB) du module (5),
- extraction des signaux hors du conducteur électrique de liaison
- et injection des signaux résultant des signaux extraits, sous forme de trames de signaux radiofréquences dans l'interface RF à contacts électriques, les signaux injectés étant à destination du module (5).

2. Procédé selon la revendication précédente, **caractérisé en ce que** les données sont transmises en modulant des signaux radiofréquences sur un signal de puissance véhiculé par le conducteur électrique:

3. Procédé selon l'une des revendications précédentes, **caractérisé en ce que** la transmission s'effectue avec un lecteur radiofréquence (3) ayant une interface capacitive (12) avec le conducteur (3) pour injecter le signal radiofréquence sur le conducteur.

4. Procédé selon l'une des revendications précédentes, **caractérisé en ce que** le module (5) est un module d'identification d'abonné (M2M).

5. Procédé selon l'une des revendications précédentes, **caractérisé en ce que** les signaux RF sont compatibles au standard ISO/ IEC 14443 et ont une fréquence de 13.56MHz.

6. Procédé selon l'une des revendications précédentes, **caractérisé en ce que** le conducteur de liaison est un câble d'alimentation véhiculant une tension continue (Vdd) utilisée par le dispositif.

7. Dispositif électronique comprenant des moyens de réception de signaux véhiculés par un conducteur électrique de liaison (3) et un module (5) ayant des plots (LA, LB) prévus pour communiquer avec une interface radiofréquence sous forme de trames de signaux radiofréquences,
**caractérisé en ce qu'**il comprend:
- une interface radiofréquence RF à contacts électriques connectée aux plots (LA, LB),
- des moyens convertisseurs (9,14) pour extraire des signaux hors du conducteur électrique de liaison et pour injecter des signaux résultant des signaux extraits sous forme de trames radiofréquences dans l'interface RF à contacts électriques, les signaux injectées étant à destination du module (5).

8. Dispositif selon la revendication précédente, **caractérisé en ce que** le conducteur fait partie d'un circuit d'alimentation en puissance.

9. Dispositif selon l'une des revendications 7 à 8, **caractérisé en ce que** le module (5) est un module d'identification (M2M) de type combi à double interface à contacts et à antenne, le circuit d'alimentation étant une alimentation en courant continu du circuit combi.

10. Système de communication radiofréquence comportant le dispositif radiofréquence RF (2) selon l'une des revendications 8 à 9, **caractérisé en ce qu'**il comprend en outre:
- un conducteur électrique de liaison (3) pour la transmission des données à destination du dispositif,
- des moyens (3) de génération de signaux comportant les données et d'injection (12, 16) sur le conducteur électrique.

11. Système selon la revendication précédente, **caractérisé en ce que** la transmission s'effectue avec un lecteur de type sans contact RF ayant une interface capacitive (12) avec le conducteur électrique de liaison pour injecter des signaux sur le conducteur.

12. Machine comportant le dispositif selon l'une des revendications 7 à 9 et/ou étant équipée du système selon l'une des revendications 10 à 11 et/ou étant apte à mettre en oeuvre le procédé selon l'une des revendications 1 à 6.

## Patentansprüche

1. Datenkommunikationsverfahren mit einer elektronischen Vorrichtung, das den Empfangsschritt von Signalen über einen elektrischen Verbindungsleiter (3) umfasst, wobei die Vorrichtung ein Modul (5) aufweist mit Kontaktstücken (LA, LB), die vorgesehen sind, um mit einer Funkfrequenzschnittstelle in Form von Funkfrequenz-Signalrastern zu kommunizieren, **dadurch gekennzeichnet, dass** es die folgenden Schritte umfasst:
- Einrichtung in der Vorrichtung einer Funkfrequenzschnittstelle RF mit elektrischen Kontakten, wobei die genannte FunkfrequenzSchnittstelle RF mit elektrischen Kontakten an die Kontaktstücke (LA, LB) des Moduls (5) angeschlossen ist,
- Entnahme der Signale aus dem elektrischen Verbindungsleiter,
- und Eingabe der aus den entnommenen Signalen resultierenden Signale in Form von Funkfrequenz-Signalrastern in die Schnittstelle RF mit elektrischen Kontakten, wobei die eingegebenen Signale für das Modul (5) bestimmt sind.

2. Verfahren gemäß dem vorangehenden Anspruch, **dadurch gekennzeichnet, dass** die Daten übertragen werden, indem die Funkfrequenzsignale über ein vom elektrischen Leiter geführtes Leistungssignal moduliert werden.

3. Verfahren gemäß einem der vorangehenden Ansprüche, **dadurch gekennzeichnet, dass** die Übertragung mit einem Funkfrequenz-Lesegerät (3) erfolgt, das eine kapazitive Schnittstelle (12) mit dem Leiter (3) hat, um das Funkfrequenzsignal in den Leiter einzugeben.

4. Verfahren gemäß einem der vorangehenden Ansprüche, **dadurch gekennzeichnet, dass** das Modul (5) ein Teilnehmeridentifikationsmodul (M2M) ist.

5. Verfahren gemäß einem der vorangehenden Ansprüche, **dadurch gekennzeichnet, dass** die Signale RF mit der Norm ISO/OEC 14443 kompatibel sind und eine Frequenz von 13.56MHz haben.

6. Verfahren gemäß einem der vorangehenden Ansprüche, **dadurch gekennzeichnet, dass** der Verbindungsleiter ein Versorgungskabel ist, das eine von der Vorrichtung verwendete Gleichspannung (Vdd) führt.

7. Elektronische Vorrichtung, umfassend Empfangsmittel von über einen elektrischen Verbindungsleiter (3) geführten Signalen und ein Modul (5) mit Kontaktstücken (LA, LB), die vorgesehen sind, um mit einer Funkfrequenzschnittstelle in Form von Funkfrequenz-Signalrastern zu kommunizieren, **dadurch gekennzeichnet, dass** sie folgendes umfasst:
- eine Funkfrequenzschnittstelle RF mit elektrischen Kontakten, die an die Kontaktstücke (LA, LB) angeschlossen ist,
- Konvertermittel (9, 14) für die Entnahme von Signalen aus dem elektrischen Verbindungsleiter und die Eingabe der in Form von Funkfrequenzrastern entnommenen Signale resultierenden Signale in die Schnittstelle RF mit elektrischen Kontakten, wobei die eingegebenen Signale für das Modul (5) bestimmt sind.

8. Vorrichtung gemäß dem vorangehenden Anspruch, **dadurch gekennzeichnet, dass** der Leiter Bestandteil ist eines Leistungsversorgungskreislaufs.

9. Vorrichtung gemäß einem der Ansprüche 7 bis 8, **dadurch gekennzeichnet, dass** das Modul (5) ein Identifikationsmodul (M2M) eines kombinierten Typs ist, mit doppelter Schnittstelle mit Kontakten und Antenne, wobei der Versorgungskreislauf eine Gleichstromversorgung des kombinierten Kreislaufs ist.

10. Funkfrequenz-Kommunikationssystem mit der Funkfrequenzvorrichtung RF gemäß einem der Ansprüche 8 bis 9, **dadurch gekennzeichnet, dass** es ferner folgendes umfasst:
- einen elektrischen Verbindungsleiter (3) für die Übertragung von für die Vorrichtung bestimmten Daten,
- Mittel (3) für die Erzeugung von Daten umfassenden Signalen und für die Eingabe (12, 16) in den elektrischen Leiter.

11. System gemäß dem vorangehenden Anspruch, **dadurch gekennzeichnet, dass** die Übertragung mit einem Lesegerät vom Typ kontaktlos RF erfolgt, das eine kapazitive Schnittstelle (12) mit dem elektrischen Verbindungsleiter hat, um Signale in den Leiter einzugeben.

12. Maschine, die eine Vorrichtung gemäß einem der Ansprüche 7 bis 9 umfasst und/oder die mit dem System gemäß einem der Ansprüche 10 bis 11 ausgestattet ist und/oder die für die Umsetzung des Verfahrens gemäß einem der Ansprüche 1 bis 6 geeignet ist.

## Claims

1. A method for data communication with an electronic device including the step of receiving signals conveyed by an electrical connection lead (3), with the device including a module (5) having pads (LA, LB) provided for communicating with a radiofrequency interface in the form of frames of radiofrequency signals,
**characterized in that** it includes the following steps:
- implementation of a RF radiofrequency interface with electrical contacts in the device, with said RF radiofrequency interface with electrical contacts being connected with the pads (LA, LB) of the module (5),
- extraction of the signals from the electrical lead
- and injection of the signals resulting from the extracted signals, in the form of frames of radiofrequency signals into the RF interface with electrical contacts, with the signals being injected into the module (5).

2. A method according to the preceding claim, **characterized in that** data are transmitted by modulating radiofrequency signals on a power signal conveyed by the electrical lead.

3. A method according to one of the preceding claims, **characterized in that** the transmission is carried out by a radiofrequency reader (3) having a capacitive interface (12) with the lead (3) for injecting the radiofrequency signal into the lead.

4. A method according to one of the preceding claims, **characterized in that** the module (5) is a subscriber identity module (M2M).

5. A method according to one of the preceding claims, **characterized in that** the RF signals are compatible with ISO/IEC 14443 standard and have a frequency of 13.56MHz.

6. A method according to one of the preceding claims, **characterized in that** the connection lead is a supply cable conveying a direct voltage (Vdd) used by the device.

7. An electronic device including means for receiving signals conveyed by an electrical connection lead (3), and a module (5) having pads (LA, LB) provided for communicating with a radiofrequency interface in the form of frames of radiofrequency signals,
**characterized in that** it includes:
- a RF radiofrequency interface with electrical contacts connected to the pads (LA, LB),
- converting means (9, 14) for extracting signals from the electrical connection lead, and for injecting signals resulting from the extracted signals in the form of radiofrequency frames into the RF interface with the electrical contacts, with the signals being injected into the module (5).

8. A device according to the preceding claim, **characterized in that** the lead belongs to a power supply circuit.

9. A device according to one of claims 7 to 8, **characterized in that** the module (5) is an identity module (M2M) of the combinational type, with a double interface with electrical contacts and an antenna, and with the supply circuit being a direct current supply of the combinational circuit.

10. A radiofrequency communication system including the RF radiofrequency device (2) according to one of claims 8 to 9, **characterized in that** it further includes:
- an electrical connection lead (3) for transmitting data to the device,
- means (3) for generating signals including data and injecting (12, 16) same into the electric lead.

11. A system according to the preceding claim, **characterized in that** the transmission is carried out with a contactless RF type reader having a capacitive interface (12) with the electrical connection lead in order to inject signals into the lead.

12. A machine including the device according to one of claims 7 to 9 and/or being equipped with the system according to one of claims 10 to 11 and/or being able to implement the method according to one of claims 1 to 6.
